# EUROPEAN PATENT APPLICATION

(11) **EP 4 507 374 A1**
(43) Date of publication of application: **12.02.2025**
(21) Application number: 23807336.5
(22) Date of filing: 12.04.2023
(51) Int. Cl.: H04W 28/18, H04W 84/06

(54) **COMMUNICATION CONTROL SYSTEM, DEVICE, AND METHOD**

(30) Priority: 19.05.2022 JP 2022082240
(71) Applicant: National Institute of Information and Communications Technology, Koganei-shi, Tokyo 184-8795 (JP)
(72) Inventor: ABE Yuma, Koganei-shi, Tokyo 184-8795 (JP); SEKIGUCHI Mariko, Koganei-shi, Tokyo 184-8795 (JP); MIURA Amane, Koganei-shi, Tokyo 184-8795 (JP)
(74) Representative: Rings, Rolf
(86) International application number: PCT/JP2023/014814
(87) International publication number: WO 2023/223723

(57) **Abstract**

[Problem]

Provided is a communication control system, a device, and a method between a resource and a network in a satellite-terrestrial interconnected communication system that enable establishing and optimizing a flexible and global communication network corresponding to a request of a user.

[Solution]

A communication control system includes non-terrestrial link control means and terrestrial resource control means. The non-terrestrial link control means controls non-terrestrial communication between a non-terrestrial node group including a non-terrestrial communication station and a terrestrial node group including a terrestrial communication station. The terrestrial resource control means controls terrestrial communication between the terrestrial node group and one or more communication terminals. The non-terrestrial link control means calculates a non-terrestrial link parameter for controlling the non-terrestrial communication based on monitoring information. The terrestrial resource control means calculates a terrestrial link parameter for controlling the terrestrial communication based on the monitoring information and the non-terrestrial link parameter.

## Description

### TECHNICAL FIELD

The present invention relates to a communication control system, a device, and a method between a resource and a network in a satellite-terrestrial interconnected communication system.

### BACKGROUND ART

There is a gradually growing need for a non-terrestrial network (NTN) that connects non-terrestrial operators that allow expanding a communication region of a terrestrial network that connects a plurality of terrestrial operators, using, for example, the fifth-generation mobile communication system (5G). As a service that uses this non-terrestrial network, a service by means of a constellation by a plurality of satellites centered around an NGSO satellite has been started, and there has also been planned a communication service that uses HAPS. The non-terrestrial network is compatible with a communication network that the terrestrial operators are not allowed to use, such as mobile communication of an aircraft and a ship and emergency communication.

In view of these, the Third Generation Partnership Project (3GPP) has already started standardization of the non-terrestrial network. For example, use cases of roaming between the terrestrial network and the non-terrestrial network, a continuous cross-border service, and the like are written in 3GPP TR22.822.

This allows a satellite-terrestrial interconnected communication system that mutually connects the non-terrestrial network and the terrestrial network to expand a wireless communication network in a three-dimensional direction by global coverage. In view of this, use cases and usage scenarios of the non-terrestrial network expand to variously diversify into services of finance, medicine, and the like, not limited to a conventional broadband communication service, a mobile communication service, an emergency communication service, and the like. Users who need the services by the non-terrestrial network will also increase. Accordingly, for example, the system as disclosed in Patent Document 1 has been attracting attention in order to meet such a need.

Patent Document 1 discloses a system that can reduce a load on a ground base station in a busy state by generating an acknowledgement command when a non-terrestrial signal receiver sufficiently and accurately receives a data packet from a non-terrestrial node, and generating a negative acknowledgement command when the non-terrestrial signal receiver inaccurately receives the data packet from the non-terrestrial node.

Patent Document 1: JP-T-2020-535770

### DISCLOSURE OF THE INVENTION

### PROBLEMS TO BE SOLVED BY THE INVENTION

However, the disclosed technique in Patent Document 1 does not consider that a plurality of non-terrestrial operators and a plurality of terrestrial operators are mutually connected in a satellite-terrestrial interconnected communication system. Thus, the disclosed technique in Patent Document 1 needs to adjust for each individual operator, for example, how much request traffic from a user is transmitted to which non-terrestrial operator, thereby having a problem of low efficiency.

Therefore, the present invention has been invented in consideration of the above-described problem, and it is an object of the present invention to provide a communication control system, a device, and a method between a resource and a network in a satellite-terrestrial interconnected communication system that enable establishing and optimizing a flexible and global communication network corresponding to a request of a user.

### SOLUTIONS TO THE PROBLEMS

A communication control system according to a first invention includes non-terrestrial link control means and terrestrial resource control means. The non-terrestrial link control means controls non-terrestrial communication between a non-terrestrial node group including a non-terrestrial communication station and a terrestrial node group including a terrestrial communication station. The terrestrial resource control means controls terrestrial communication between the terrestrial node group and one or more communication terminals. The non-terrestrial link control means calculates a non-terrestrial link parameter for controlling the non-terrestrial communication based on monitoring information relating to at least one communication environment among the non-terrestrial node group, the terrestrial node group, and the communication terminal. The terrestrial resource control means calculates a terrestrial link parameter for controlling the terrestrial communication based on the monitoring information and the non-terrestrial link parameter calculated by the non-terrestrial link control means.

In the communication control system according to a second invention, which is in the first invention, the non-terrestrial link control means calculates the non-terrestrial link parameter based on request information relating to a request for communication and the monitoring information.

In the communication control system according to a third invention, which is in the first invention, the non-terrestrial link control means determines a priority order of controlling communication of the communication terminal based on the request information, and calculates the non-terrestrial link parameter based on the determined priority order and the monitoring information.

The communication control system according to a fourth invention, which is in any of the first invention to the third invention, further includes non-terrestrial network control means that controls non-terrestrial network communication between the non-terrestrial node groups. The non-terrestrial network control means calculates a network link parameter for controlling non-terrestrial network communication based on the monitoring information. The non-terrestrial link control means calculates the non-terrestrial link parameter based on the monitoring information and the network link parameter calculated by the non-terrestrial network control means.

A communication control device according to a fifth invention includes a non-terrestrial link control unit and a terrestrial resource control unit. The non-terrestrial link control unit controls non-terrestrial communication between a non-terrestrial node group including a non-terrestrial communication station and a terrestrial node group including a terrestrial communication station. The terrestrial resource control unit controls terrestrial communication between the terrestrial node group and one or more communication terminals. The non-terrestrial link control unit calculates a non-terrestrial link parameter for controlling the non-terrestrial communication based on monitoring information relating to at least one communication environment among the non-terrestrial node group, the terrestrial node group, and the communication terminal. The terrestrial resource control unit calculates a terrestrial link parameter for controlling the terrestrial communication based on the monitoring information and the non-terrestrial link parameter calculated by the non-terrestrial link control unit.

A communication control method according to a sixth invention causes a computer to execute: a non-terrestrial link control step of controlling non-terrestrial communication between a non-terrestrial node group including a non-terrestrial communication node and a terrestrial node group including a terrestrial communication node; and a terrestrial resource control step of controlling terrestrial communication between the terrestrial node group and one or more communication terminals. The non-terrestrial link control step calculates a non-terrestrial link parameter for controlling the non-terrestrial communication based on monitoring information relating to at least one communication environment among the non-terrestrial node group, the terrestrial node group, and the communication terminal. The terrestrial resource control step calculates a terrestrial link parameter for controlling the terrestrial communication based on the monitoring information and the non-terrestrial link parameter calculated at the non-terrestrial link control step.

### EFFECTS OF THE INVENTION

According to the first invention to the sixth invention, the non-terrestrial link control means calculates the non-terrestrial link parameter based on the monitoring information, and the terrestrial resource control means calculates the terrestrial link parameter based on the monitoring information and the non-terrestrial link parameter. In view of this, even when there exist a plurality of non-terrestrial operators and terrestrial operators, roaming irrespective of a non-terrestrial network and a terrestrial network is possible. Additionally, even when there is a difference in coverage or capacity between the individual non-terrestrial operator and the individual terrestrial operator, an appropriate link parameter is calculatable corresponding to the difference. Thus, a flexible and global communication network can be established and optimized corresponding to a user request.

In particular, according to the second invention, the non-terrestrial link control means calculates the non-terrestrial link parameter based on the request information and the monitoring information. In view of this, an appropriate link parameter is calculatable corresponding to characteristics of a user and a use case. Thus, a more flexible and global communication network can be established and optimized corresponding to the user request.

In particular, according to the third invention, the non-terrestrial link control means determines the priority order based on the request information, and calculates the non-terrestrial link parameter based on the determined priority order and the monitoring information. In view of this, a more appropriate link parameter is calculatable corresponding to the characteristics of the user and the use case. Thus, a more flexible and global communication network can be established and optimized corresponding to the user request.

In particular, according to the fourth invention, the non-terrestrial network control means calculates the network link parameter for controlling the non-terrestrial network communication based on the monitoring information, and the non-terrestrial link control means calculates the non-terrestrial link parameter based on the monitoring information and the network link parameter calculated by the non-terrestrial network control means. In view of this, a link parameter considering respective link states of the non-terrestrial operator and the terrestrial operator is calculatable. Thus, a more flexible and global communication network can be established and optimized corresponding to the user request.

### BRIEF DESCRIPTION OF THE DRAWINGS

Fig. 1 is a diagram illustrating an overall configuration of a hierarchical communication control system to which the present invention is applied.
Fig. 2 is a diagram illustrating a structure of a management station and a feeder-link earth station.
Fig. 3 is a diagram illustrating a configuration of a terrestrial communication station, such as a terrestrial node group.
Fig. 4 is a diagram illustrating a configuration of an orchestrator.
Fig. 5 is a diagram illustrating a process of an operation of the hierarchical communication control system.
Fig. 6 is a diagram illustrating a process of an operation of the orchestrator.
Fig. 7 is a diagram illustrating a process of an operation of the management station.
Fig. 8 is a diagram illustrating a process of an operation of a terrestrial operator, such as a terrestrial base station.
Fig. 9Ais a diagram illustrating a configuration of a hierarchical communication control system using a C-plane (control plane).
Fig. 9B is a diagram illustrating a configuration of a hierarchical communication control system using an M-plane (management plane).
Fig. 10 is a diagram illustrating a configuration of a hierarchical communication control system using a U-plane (user plane).

### DESCRIPTION OF PREFERRED EMBODIMENTS

The following describes a hierarchical communication control system to which the present invention is applied in detail with reference to the drawings.

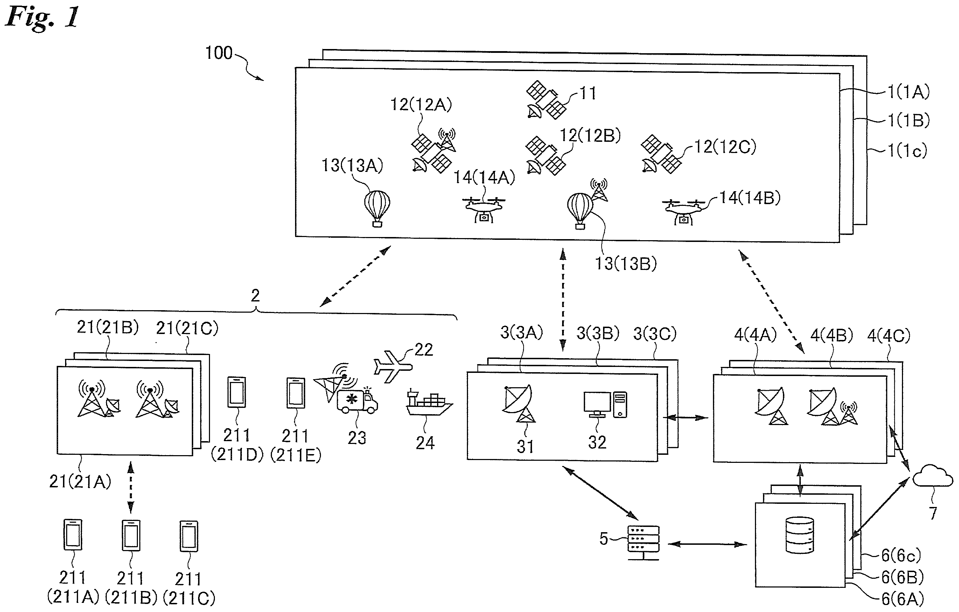

Fig. 1 illustrates an overall configuration of a hierarchical communication control system 100 to which the present invention is applied. The hierarchical communication control system 100 includes a non-terrestrial node group 1, a terrestrial node group 2 connected to the non-terrestrial node group 1, a management station 3 connected to the non-terrestrial node group 1 and the terrestrial node group 2, a feeder-link earth station 4 connected to the non-terrestrial node group 1 and the management station 3, an orchestrator 5 connected to the management station 3, a terrestrial core 6 connected to the feeder-link earth station 4 and the orchestrator 5, and a data network 7 connected to the feeder-link earth station 4 and the terrestrial core 6. The hierarchical communication control system 100 is not limited to the configuration as illustrated in Fig. 1, and the non-terrestrial node group 1, the terrestrial node group 2, the management station 3, the feeder-link earth station 4, the orchestrator 5, the terrestrial core 6, and the data network 7 may be conveniently connected to one another.

The hierarchical communication control system 100 may include a plurality of the non-terrestrial node groups 1 (1A to 1C), a plurality of the management stations 3 (3Ato 3C), a plurality of the feeder-link earth stations 4 (4Ato 4C), and the terrestrial cores 6 (6A to 6C) respectively managed by different operators.

The non-terrestrial node group 1 is a node group constituted of non-terrestrial nodes including a non-terrestrial communication station. The non-terrestrial node group 1 is a node group constituted of non-terrestrial nodes that exist in any orbit and at any altitude and include a non-terrestrial communication station, such as unmanned aircrafts including a geostationary earth orbit (GEO) satellite 11, a non-geostationary orbit (NGSO) satellite 12, a high-altitude communication platform 13 (HAPS: High-Altitude Platform Stations), and a drone 14. The non-terrestrial node groups 1 (1A, 1B) may be respectively managed by different non-terrestrial operators. The non-terrestrial node group 1 may include non-terrestrial nodes managed by a plurality of non-terrestrial operators, for example, a plurality of the geostationary earth orbit satellites 11, a plurality of the non-geostationary orbit satellites 12 (12A to 12C), a plurality of the high-altitude communication platforms 13 (13A, 13B), and a plurality of the drones 14 (14A, 14B).

The non-terrestrial node group 1 performs non-terrestrial communication with the terrestrial node group 2. The non-terrestrial node group 1 performs non-terrestrial network communication between non-terrestrial systems as systems constituted of portions managed by non-terrestrial operators. The non-terrestrial node group 1 may perform non-terrestrial network communication with the non-terrestrial node groups 1 (1A, 1B) respectively managed by different non-terrestrial operators.

The non-terrestrial system is a system constituted of a portion managed by a non-terrestrial operator, and includes the non-terrestrial node group 1, a non-terrestrial user, the feeder-link earth station 4, the management station 3, and the like. The non-terrestrial user is a fixed station and a mobile station that directly communicate with the non-terrestrial node group 1 and receive a communication service, and the mobile station may be a flying object (an aircraft 22, the drone 14, the HAPS 13, an unmanned aerial vehicle (UAV), and the like), a moving node on the sea, under the sea, on the water, or under the water (a ship 24, a UAV, an unmanned surface vehicle (USV), and the like), or a moving node on the ground (an automobile 23, a train, and the like).

The non-terrestrial node group 1 has a communication payload that may be a bent-pipe type (transparent type) payload that performs frequency conversion and amplification on a received signal, and thereafter, transmits the signal to another node (including the feeder-link earth station 4). The communication payload that the non-terrestrial node group 1 has may be a regenerative type payload that performs demodulation, decoding, calculation processing, frequency conversion, modulation, coding, and amplification on a received signal using a mounted processor, and thereafter, transmits the signal to another node (including the feeder-link earth station 4). The non-terrestrial network 1 has a communication payload that may include a flexible payload, such as a digital channelizer and a digital beamformer.

The terrestrial node group 2 is a node group that includes a terrestrial communication station, such as a terrestrial base station 21 and a communication terminal 211. The terrestrial node group 2 may be a node group managed by a terrestrial operator. The terrestrial node group 2 may include a plurality of the terrestrial base stations 21 (21Ato 21C) and a plurality of the communication terminals 211 (211Ato 211E).

The generations of mobile communication systems covered by the terrestrial node group 2 are not limited, and the terrestrial node group 2 may cover, for example, 5G, 4G/LTE, 3G, and the mobile communication systems of generations that will be additionally standardized in the future (Beyond5G/6G). The terrestrial node group 2 may have functions of the communication terminal 211, the terrestrial base station 21, and the terrestrial core 6 appropriate for the covered generations of the mobile communication systems and interface functions for them.

The terrestrial node group 2 performs terrestrial communication between terrestrial systems as systems constituted of portions managed by terrestrial operators. The terrestrial system is a system constituted of a portion managed by a terrestrial operator, and includes the communication terminal 211, the terrestrial base station 21, the terrestrial core 6, and the like.

The management station 3 gives instructions to the non-terrestrial node group 1, the terrestrial node group 2, the feeder-link earth station 4, the orchestrator 5, and the like, and controls the non-terrestrial communication and the terrestrial communication. The management station 3 calculates a non-terrestrial link parameter for controlling the non-terrestrial communication based on monitoring information relating to at least one communication environment of, for example, the non-terrestrial node group 1, the terrestrial node group 2, and the communication terminal 211.

The feeder-link earth station 4 is an earth station that houses communication links between the non-terrestrial node group 1 and the communication terminal 211, and is connected to a data network (DN), such as the Internet. When the non-terrestrial system is used as a backhaul of the terrestrial system, the feeder-link earth station 4 also serves as a relay point between the terrestrial operator and the terrestrial core 6. The feeder-link earth station 4 may be provided for each non-terrestrial operator. The feeder-link earth station 4 may be used by a non-terrestrial operator other than the provided non-terrestrial operator.

The orchestrator 5 unifies and manages the whole network of the hierarchical communication control system 100. The orchestrator 5 calculates a network link parameter for controlling the non-terrestrial network communication based on, for example, the monitoring information.

The terrestrial core 6 has a function of performing registration, authentication, session establishment, and the like of the communication terminal 211. The terrestrial core 6 may have functions of request adjustment of the terrestrial system and determination of resource distribution to the respective communication terminals 211. The terrestrial core 6 may be provided for each terrestrial operator or may be used by a operator other than the provided terrestrial operator.

The data network 7 is any network, such as the Internet. The data network 7 may be a cloud or the like in which various information is stored.

The communication terminal 211 is a terminal that receives a service of the terrestrial communication, and may communicate via the terrestrial base station 21 or may directly communicate with the non-terrestrial node group 1 when the terminal has an interface with the non-terrestrial node group 1.

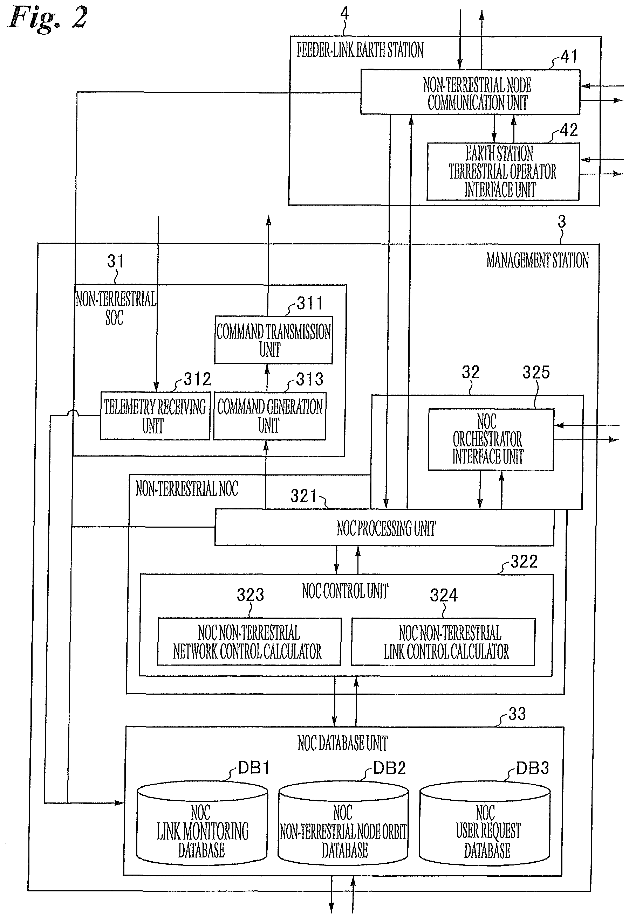

Next, the function of the management station 3 will be described with reference to Fig. 2. Fig. 2 is a diagram illustrating a structure of the management station 3 and the feeder-link earth station 4.

The management station 3 includes a non-terrestrial network operations center (NOC) 32, a non-terrestrial satellite operations center (SOC) 31 connected to the non-terrestrial NOC 32, and an NOC database unit 33 connected to the non-terrestrial NOC 32 and the non-terrestrial SOC 31 as illustrated in Fig. 2. These configurations may be arranged by any connection.

The non-terrestrial NOC 32 calculates the non-terrestrial link parameter for controlling the non-terrestrial communication based on, for example, the monitoring information. The non-terrestrial NOC 32 may calculate the network link parameter for controlling the non-terrestrial network communication based on, for example, the monitoring information. The non-terrestrial NOC 32 may be provided for each non-terrestrial operator. In such a case, the non-terrestrial NOC 32 may calculate a terrestrial link parameter for controlling terrestrial communication of a non-terrestrial operator other than the provided non-terrestrial operator.

The non-terrestrial NOC 32 includes an NOC processing unit 321 connected to the non-terrestrial SOC 31, an NOC control unit 322 connected to the NOC processing unit 321 and the NOC database unit 33, and an NOC orchestrator interface unit 325 connected to the NOC processing unit 321 and the orchestrator 5.

The NOC orchestrator interface unit 325 has an interface function with the orchestrator 5. The NOC orchestrator interface unit 325 obtains request information relating to a request for communication from the orchestrator 5, and notifies the orchestrator 5 of various kinds of link parameters and the like determined by the NOC control unit 322.

The NOC processing unit 321 determines a function used by the NOC control unit 322 based on information received from the NOC orchestrator interface unit 325 and a non-terrestrial node communication unit 41. The NOC processing unit 321 may obtain request information, such as an own positional coordinate, a communication destination, a QoS parameter, and a request bandwidth of the non-terrestrial user. Based on information determined by the NOC control unit 322, the notification contents to the NOC orchestrator interface unit 325, a command generation unit 313, and the non-terrestrial node communication unit 41 are determined.

The NOC control unit 322 includes an NOC non-terrestrial network control calculator 323 and an NOC non-terrestrial link control calculator 324. The NOC control unit 322 calculates parameters by the NOC non-terrestrial network control calculator 323 and the NOC non-terrestrial link control calculator 324 corresponding to the role of the non-terrestrial operator. The NOC control unit 322 reads out data from the NOC database unit 33 during the calculation. The NOC control unit 322 updates the NOC database unit 33 at a point when the calculation is terminated and transmission of a command to the non-terrestrial node is completed. The NOC control unit 322 does not need to include the NOC non-terrestrial network control calculator 324 when the orchestrator 5 controls a non-terrestrial network.

The NOC non-terrestrial network control calculator 323 calculates the network link parameter for controlling the non-terrestrial network communication based on the monitoring information. The NOC non-terrestrial network control calculator 323 determines a beam used in communication (in a case of a multibeam satellite that uses a radio wave), a frequency/wavelength, output power, bandwidth allocation (in a case of a digital channelizer mounted satellite), a beam radiation area (in a case of a digital beamformer mounted satellite), a modulation scheme, the kind of error correction code and a code rate, and the presence/absence of encryption corresponding to the calculated network link parameter.

The NOC non-terrestrial link control calculator 324 calculates the non-terrestrial link parameter for controlling the non-terrestrial communication based on the monitoring information.

The NOC database unit 33 includes an NOC link monitoring database DB 1 that stores the monitoring information, an NOC non-terrestrial node orbit database DB2 that stores information relating to a non-terrestrial node orbit, and an NOC user request database DB3 that stores the request information. The NOC database unit 33 shares information via a cloud server when it is connected to the cloud server and a functional unit that the non-terrestrial operator has is dispersedly arranged.

The non-terrestrial SOC 31 generates a command from the various kinds of link parameters transmitted from the non-terrestrial NOC 32. The non-terrestrial SOC 31 may be provided for each non-terrestrial operator. In such a case, the non-terrestrial SOC 31 generates a command from the terrestrial link parameter for controlling terrestrial communication of a non-terrestrial operator other than the provided non-terrestrial operator that has been calculated by the non-terrestrial NOC 32.

The non-terrestrial SOC 31 includes the command generation unit 313 that generates a command based on information output from the NOC processing unit 321, a command transmission unit 311 that transmits the command generated by the command generation unit 313, and a telemetry receiving unit 312 that outputs the received information to the NOC database unit 33. The non-terrestrial SOC 31 plays a role in command transmission to the non-terrestrial operators and telemetry reception from each of the non-terrestrial operators.

The NOC database unit 33 includes the NOC link monitoring database DB1 that stores the monitoring information, the NOC non-terrestrial node orbit database DB2 that stores the information relating to the non-terrestrial node orbit, and the NOC user request database DB3 that stores the request information.

The feeder-link earth station 4 includes the non-terrestrial node communication unit 41 for communicating with the non-terrestrial node group 1 and an earth station terrestrial operator interface unit 42 for communicating with the terrestrial node group 2.

The non-terrestrial node communication unit 41 communicates with the non-terrestrial node group 1. The non-terrestrial node communication unit 41 is connected to the data network 7, and, when a U-plane, which will be described later, is used, exchanges signals with the non-terrestrial user. The non-terrestrial node communication unit 41 transmits the obtained various information to the NOC database unit 33. The non-terrestrial node communication unit 41 notifies the NOC processing unit 321 of the request information of the non-terrestrial user.

The earth station terrestrial operator interface unit 42 is connected to a plurality of the terrestrial operators, and, when the U-plane or a C-plane, which will be described later, is used, exchanges signals with a terrestrial user.

The terrestrial base station 21 is a ground station that houses traffic of the communication terminal 211, and has a communication interface with the non-terrestrial node group 1. The terrestrial base station 21 does not need to have the communication interface with the non-terrestrial node group 1, and a portion of the terrestrial core 6 connected to the terrestrial base station 21 or a network node, such as a router, may have the communication interface with the non-terrestrial node group 1. The terrestrial base station 21 may be handled as a non-terrestrial user when it communicates with the non-terrestrial node group 1. The terrestrial base station 21 may be handled as a plurality of non-terrestrial users when a plurality of slices are defined. The terrestrial base station 21 may have an interface with the terrestrial system to directly communicate with the terrestrial core 6. The terrestrial base station 21 may be provided for each terrestrial operator, or may be used by a operator other than the provided terrestrial operator. The slice is cohesion of a plurality of terrestrial users with specific QoS parameters. Corresponding to the QoS parameters and the use cases of the respective users, the terrestrial core 6 of the terrestrial operator or the terrestrial base station 21 may constitute the slice, or the orchestrator 5 may constitute the slice. When users housed by a certain terrestrial base station 21 spread over a plurality of slices, the terrestrial base station 21 may be handled as the same number of non-terrestrial users as the number of the slices existing. The orchestrator 5 and the non-terrestrial node group 1 may have a function of generating the slice. The QoS parameter may be defined again for each slice.

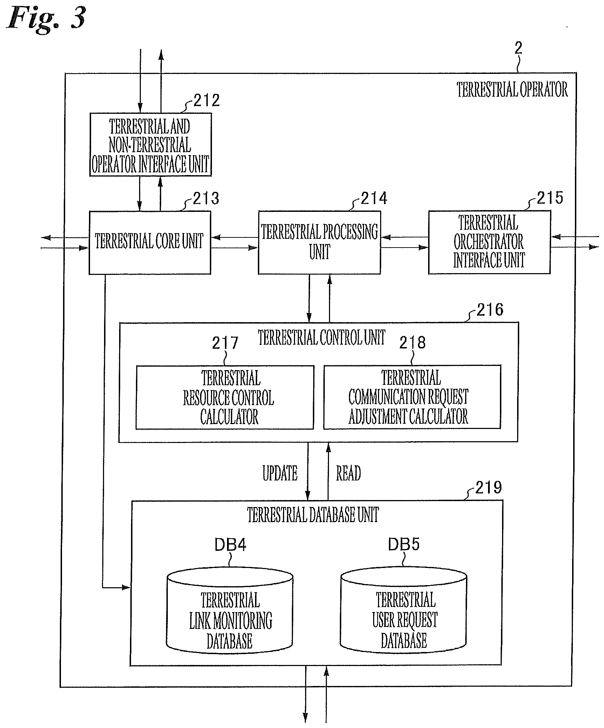

Next, a configuration of the terrestrial communication station, such as the terrestrial node group 2, will be described. Fig. 3 is a diagram illustrating the configuration of the terrestrial communication station, such as the terrestrial node group 2.

The terrestrial base station 21 includes a terrestrial processing unit 214, a terrestrial control unit 216 connected to the terrestrial processing unit 214, a terrestrial database unit 219 connected to the terrestrial control unit 216, a terrestrial core unit 213 connected to the terrestrial processing unit 214, the terrestrial database unit 218, and the terrestrial core 6, a terrestrial and non-terrestrial operator interface unit 212 connected to the terrestrial core unit 213 and the non-terrestrial operator, and an orchestrator interface unit 215 connected to the orchestrator 5 and the terrestrial processing unit 214 as illustrated in Fig. 3.

The orchestrator interface unit 215 has an interface function with the orchestrator 5. The orchestrator interface unit 215 notifies the orchestrator 5 of request information relating to a request for communication from the communication terminal 211 or the like, and receives a calculation result, an allocation result, and the like.

The terrestrial and non-terrestrial operator interface unit 212 is connected to the plurality of non-terrestrial operators, and, when the U-plane or the C-plane, which will be described later, is used, exchanges signals with the terrestrial user.

When the C-plane, which will be described later, is used, the terrestrial core unit 213 exchanges signals with the terrestrial user. The terrestrial core unit 213 outputs a resource control request to the terrestrial processing unit 214 when resource management is necessary. The terrestrial core unit 213 is also connected to the data network 7, and when the U-plane, which will be described later, is used, the signal of the terrestrial user passes through the terrestrial core unit 213.

The terrestrial processing unit 214 determines a function used by the terrestrial control unit 216 based on the information received from the orchestrator interface unit 215 and the terrestrial core unit 213. The terrestrial processing unit 214 may obtain request information, such as an own positional coordinate, a communication destination, a QoS parameter, and a request bandwidth of the non-terrestrial user. The terrestrial processing unit 214 determines the notification contents to the orchestrator interface unit 215 and the terrestrial core unit 213 based on the information determined by the terrestrial control unit 216.

The terrestrial control unit 216 includes a terrestrial resource control unit 217 and a terrestrial communication request adjustment calculator 218. The terrestrial control unit 216 reads out data from the terrestrial database unit 219 during calculation, and updates the data of the terrestrial database unit 219 after the calculation.

The terrestrial resource control unit 217 calculates the terrestrial link parameter for controlling the terrestrial communication based on the monitoring information and the non-terrestrial link parameter calculated by the non-terrestrial NOC 32 or the like.

The terrestrial communication request adjustment calculator 218 adjusts the terrestrial communication based on the monitoring information.

The terrestrial database unit 219 includes a terrestrial link monitoring database DB4 that stores the monitoring information and a terrestrial user request database DB5 that stores the request information. The terrestrial database unit 219 shares information via a cloud server when it is connected to the cloud server and a functional unit that the terrestrial operator has is dispersedly arranged.

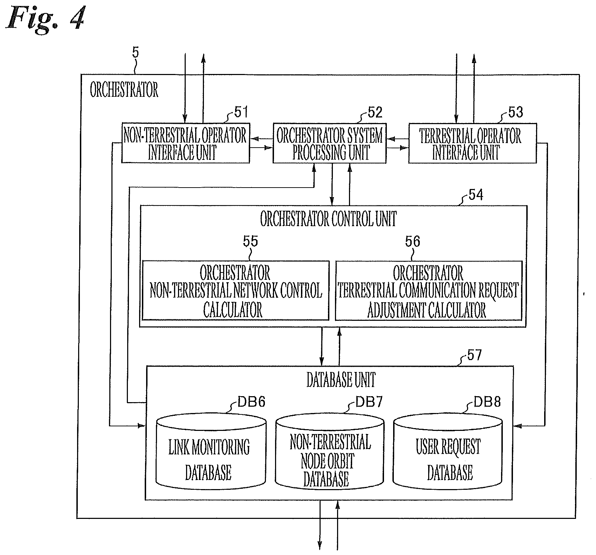

Fig. 4 is a diagram illustrating a configuration of the orchestrator 5. The orchestrator 5 includes an orchestrator system processing unit 52, an orchestrator control unit 54 connected to the orchestrator system processing unit 52, an orchestrator database unit 57 connected to the orchestrator system processing unit 52 and the orchestrator control unit 54, a non-terrestrial operator interface unit 51 connected to the orchestrator system processing unit 52 and the orchestrator database unit 57, and a terrestrial operator interface unit 53 connected to the orchestrator system processing unit 52 and the orchestrator database unit 57. These configurations may be arranged by any connection.

The non-terrestrial operator interface unit 51 is connected to the plurality of non-terrestrial operators to notify the non-terrestrial operators of the request information and various kinds of calculation results calculated by the orchestrator system processing unit 52 and receive the calculation results, the allocation results, the monitoring information, and the like from the non-terrestrial operators.

The orchestrator processing unit 52 reads out the information relating to the non-terrestrial node orbit, the monitoring information, and the like from the orchestrator database unit 57, and executes predictions of throughput, delay, the survival probability of a link, and the like in the future and optimized calculation of a frequency resource to be used in the future while associating with the orchestrator control unit 54. The orchestrator processing unit 52 determines a function used by the orchestrator control unit 54 based on the information received by the non-terrestrial operator interface unit 51 and the terrestrial operator interface unit 53. The orchestrator processing unit 52 determines the notification contents to the respective operators based on the information determined by the orchestrator control unit 54.

The terrestrial operator interface unit 53 is connected to the plurality of terrestrial operators to give notification of the request information and the various kinds of calculation results calculated by the orchestrator processing unit 52 from the terrestrial operators and receive the calculation results, the allocation results, the monitoring information, and the like from the non-terrestrial operators.

The orchestrator control unit 54 includes an orchestrator non-terrestrial network control calculator 55 and an orchestrator terrestrial communication request adjustment calculator 56. The orchestrator control unit 54 calculates each parameter corresponding to the role of the orchestrator 5. The orchestrator control unit 54 reads out data from the orchestrator database unit 57 as necessary.

The orchestrator non-terrestrial network control calculator 55 calculates the non-terrestrial link parameter for controlling the non-terrestrial communication based on the monitoring information. The orchestrator non-terrestrial network control calculator 55 calculates the network link parameter for controlling the non-terrestrial network communication between the non-terrestrial node groups 1 based on the monitoring information.

The orchestrator terrestrial communication request adjustment calculator 56 calculates adjustment of a request for the terrestrial communication.

The orchestrator database unit 57 includes a link monitoring database DB6 that stores the monitoring information, a non-terrestrial node orbit database DB7 that stores the information relating to the non-terrestrial node orbit, and a user request database DB8 that stores the request information.

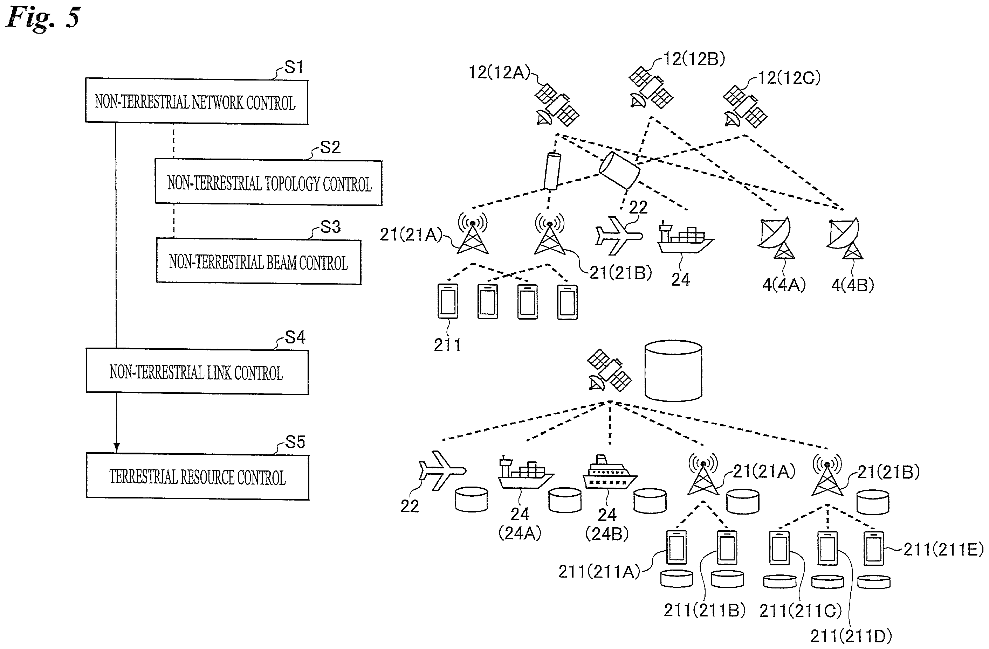

Next, an operation of the hierarchical communication control system 100 will be described. Fig. 5 illustrates a process of the operation of the hierarchical communication control system 100. The operation of the hierarchical communication control system 100 is divided into three kinds of control functions, non-terrestrial network communication control, non-terrestrial link control, and terrestrial resource control, and they are hierarchically implemented as illustrated in Fig. 5 in order to handle temporal changes of a communication request and a link state and different characteristics of the non-terrestrial system and the terrestrial system.

The non-terrestrial network communication is communication between the non-terrestrial node groups 1. The non-terrestrial network communication may be communication between the plurality of non-terrestrial node groups 1 respectively managed by different non-terrestrial operators. The non-terrestrial network communication may be communication between the non-terrestrial systems.

The non-terrestrial link control is control of the non-terrestrial communication between the non-terrestrial node group 1 and the terrestrial node group 2. The non-terrestrial link control may be control of communication between the non-terrestrial system and the terrestrial system. The non-terrestrial link control may be control of communication of a link related to the non-terrestrial node group 1. The link related to the non-terrestrial node group 1 is any of links between the non-terrestrial user and the non-terrestrial node group 1, between the non-terrestrial node groups 1, and between the non-terrestrial node group 1 and the feeder-link earth station 4.

The terrestrial resource control is control of the terrestrial communication between the terrestrial node group 2 and one or more communication terminals 211. The terrestrial resource control may be control of communication between the terrestrial node group 2 and the terrestrial user. The terrestrial resource control may be control of communication between the terrestrial systems.

First, at Step S1, the hierarchical communication control system 100 starts to control the non-terrestrial network communication. At Step S1, for example, the orchestrator 5 calculates the network link parameter for controlling the non-terrestrial network communication based on the monitoring information, and starts to control the non-terrestrial network communication based on the calculated network link parameter. At Step S1, for example, instead of the orchestrator 5, the management station 3 may calculate the network link parameter for controlling the non-terrestrial network communication based on the monitoring information, and start to control the non-terrestrial network communication based on the calculated network link parameter.

The monitoring information is information relating to at least one communication environment of the non-terrestrial node group 1, the terrestrial node group 2, and the communication terminal 211. The monitoring information is evaluation indexes, such as throughput, delay, the numbers of users of a communicable terrestrial system and non-terrestrial system, the number of handovers, the number of used non-terrestrial nodes, and the numbers of terrestrial and non-terrestrial operators through which communication signals pass, of, for example, the non-terrestrial node group 1, the terrestrial node group 2, or the communication terminal 211. The monitoring information may be, for example, reception power, reception C/N₀ (a ratio of operator power to noise power density), a center frequency, a bandwidth, throughput, a bit error rate (BER), a packet loss rate, and a rainfall attenuation. The monitoring information includes information relating to a communication environment of the non-terrestrial system. The information relating to the communication environment of the non-terrestrial system may be information relating to specifications, such as the numbers of the non-terrestrial communication stations included in the non-terrestrial node group 1 and the feeder-link earth stations 4, an orbit, a position, coverage, a bandwidth, and the maximum electric power, the number of the non-terrestrial users, a resource usage state of the non-terrestrial node group 1, or a link state, such as throughput, propagation delay, jitter, a packet loss, atmospheric propagation, and the Doppler shift. The link parameter is a parameter relating to the non-terrestrial node group 1 used in communication, the used feeder-link earth station 4, a transmission path, and a network configuration, such as topology. The link parameter may be a parameter relating to bandwidth allocation. The link parameter may be transmission power, a operator frequency, a bandwidth, a modulation scheme, the kind of error correction code and its code rate, a multiplexing scheme, the number of operators, and the like. The network link parameter is a link parameter for controlling the non-terrestrial network communication.

At Step S1, for example, the orchestrator 5 may calculate topology and a used bandwidth of the non-terrestrial network communication based on only information relating to the communication environment of the non-terrestrial system included in the monitoring information.

At Step S1, for example, the orchestrator 5 may calculate the network link parameter based on the request information relating to the request for communication from at least one of the non-terrestrial node group 1, the terrestrial node group 2, and the communication terminal 211 and the monitoring information. The request information may be, for example, own positional coordinates (latitudes, longitudes, and altitudes) of the terrestrial user and the non-terrestrial user requesting communication, a communication destination (another user or the data network 7), and a Quality of Service (QoS) parameter.

The QoS parameter includes, for example, a resource type, priority, acceptable delay, and the degree of security. The QoS parameter may include a guaranteed bandwidth when the resource type is a Guaranteed Bit Rate (GBR). The QoS parameter may use the 3GPP standard 5G QoS Identifier (5QI) or may be newly defined in a case of 5G. The priority and the degree of security may be set corresponding to a use case or the amount of charging by the user, and a communication plan.

At Step S1, for example, the orchestrator 5 may determine a priority order of controlling communication for the plurality of communication terminals 211 based on the request information, and calculate the network link parameter based on the determined priority order and the monitoring information. The orchestrator 5 may determine the priority order based on, for example, the priority of the respective communication terminals 211.

At Step S1, for example, the orchestrator 5 may determine bandwidth allocation used in communication by a unit of each operator. In such a case, for example, the orchestrator 5 allocates a bandwidth of 50 MHz to a GEO and 50 MHz to an LEO for a operator A and a bandwidth of 50 MHz to a GEO and 50 MHz to an LEO for a operator B. At Step S1, for example, the orchestrator 5 may allocate the total bandwidth of 100 MHz to the operator A and the total bandwidth of 100 MHz to the operator B.

Next, at Step S2, the management station 3 controls the topology of the non-terrestrial network. At Step S2, for example, the orchestrator 5 controls the topology of the non-terrestrial network based on the network link parameter calculated at Step S1. The topology is a structure of a network, and is a communication path, a shape of a link, and the like.

Next, at Step S3, the management station 3 performs non-terrestrial beam control. For example, the orchestrator 5 controls the bandwidth allocations to the respective nodes and respective beams of the respective nodes in consideration of the request amounts of the terrestrial base station 21 and the respective non-terrestrial users including a slice based on the network link parameter calculated at Step S1. At Step S3, the management station 3 may control a frequency flexibility function and an area flexibility function.

Next, at Step S4, the management station 3 performs the non-terrestrial link control. For example, the management station 3 calculates the non-terrestrial link parameter for controlling the non-terrestrial communication based on the network link parameter calculated at Step S1 and the monitoring information, and controls the non-terrestrial communication. At Step S4, for example, the management station 3 allocates a frequency bandwidth to the non-terrestrial communication that is a link relating to the non-terrestrial node group 1 including the terrestrial base station 21 based on the monitoring information indicative of the communication environment of the terrestrial node group 2 and the network link parameter calculated at Step S1. The management station 3 determines, for example, a frequency channel when a radio wave is used, and an optical multiplicity when a light is used. At Step S4, for example, the management station 3 also determines output power, modulation/encoding systems, and the like of respective non-terrestrial links based on the network link parameter calculated at Step S1. In a case of a multibeam non-terrestrial node, it may be used beams of the respective non-terrestrial links.

At Step S4, the management station 3 may calculate the non-terrestrial link parameter based on the request information and the monitoring information. At Step S4, for example, the management station 3 may allocate a frequency bandwidth to the terrestrial communication based on information relating to the communication environment of the terrestrial system included in the monitoring information and the topology and the used bandwidth of the non-terrestrial network communication calculated at Step S1.

At Step S4, the management station 3 may calculate the non-terrestrial link parameter based on the monitoring information without using the network link parameter calculated at Step S1.

Next, at Step S5, the hierarchical communication control system 100 controls a resource of the terrestrial communication. At Step S5, for example, the terrestrial base station 21 calculates the terrestrial link parameter for controlling the terrestrial communication based on, for example, the non-terrestrial link parameter calculated at Step S4 and the monitoring information, and controls the terrestrial communication based on the calculated terrestrial link parameter. At Step S5, for example, the terrestrial base station 21 allocates a bandwidth of communication between the terrestrial user and the terrestrial base station 21 based on, for example, the non-terrestrial link parameter calculated at Step S4 and the monitoring information.

At Step S5, the terrestrial base station 21 may calculate the terrestrial link parameter based on the request information and the monitoring information. At Step S5, for example, the terrestrial base station 21 may allocate a bandwidth of the communication between the terrestrial user and the terrestrial base station 21 based on information relating to the communication environment of the communication terminal 211 included in the monitoring information and the frequency bandwidth allocated at Step S4.

Next, respective operations of the orchestrator 5, the management station 3, and the terrestrial base station 21 in the hierarchical communication control system 100 will be described.

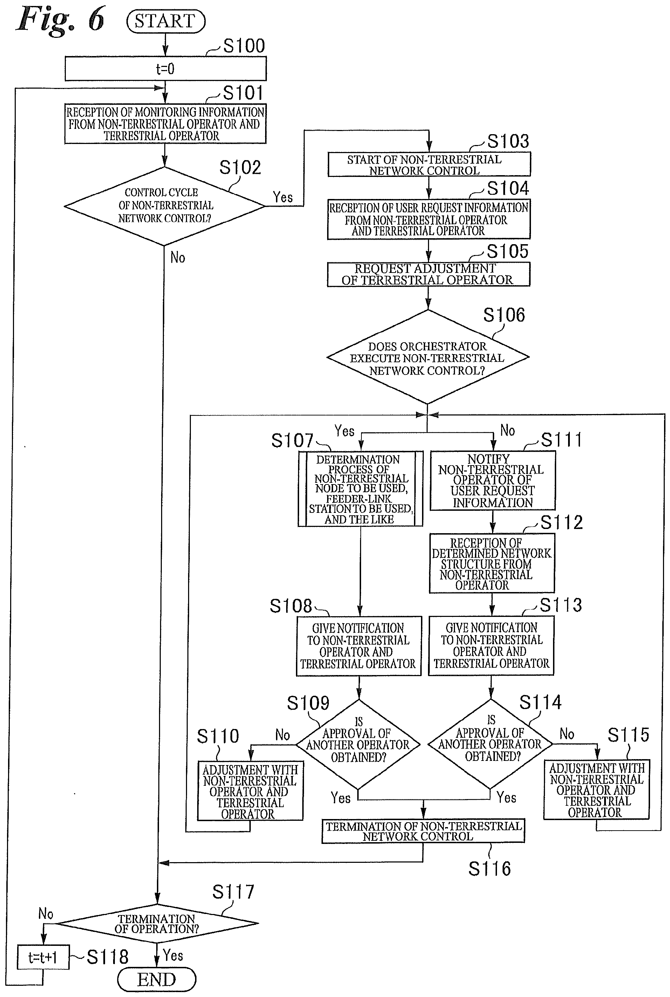

Fig. 6 illustrates a process of the operation of the orchestrator 5. The orchestrator 5 first sets a time point ***t*** to 0 at Step S100.

Next, the orchestrator 5 receives the monitoring information at Step S101. In such a case, the orchestrator 5 receives various information from the NOC database unit 33 of the terrestrial communication station and the non-terrestrial communication station managed by the terrestrial operator and the non-terrestrial operator, the orchestrator database unit 57, the terrestrial database unit 219, and the like.

Next, the orchestrator 5 determines a control cycle of the non-terrestrial network communication at Step S102. When the orchestrator 5 fits into the control cycle of the non-terrestrial network communication, the orchestrator 5 proceeds to Step S103. When the orchestrator 5 does not fit into the control cycle of the non-terrestrial network communication, the orchestrator 5 proceeds to Step S117.

The control cycle of the control of the non-terrestrial network communication requires the orchestrator 5 to collect a state of the non-terrestrial node group 1 from the plurality of non-terrestrial operators and make an adjustment between the non-terrestrial and the terrestrial operators. The non-terrestrial link control is executable more frequently than the control of the non-terrestrial network communication because the non-terrestrial NOC 32 manages its own system. In view of this, the control cycle of the control of the non-terrestrial network communication requires a time period longer than that of the control cycle of the non-terrestrial link control. The terrestrial operator performs the terrestrial resource control in a cycle of approximately a millisecond to a second. The terrestrial system has a longer control cycle of the non-terrestrial link control than the control cycle of the terrestrial resource control, and therefore, the allocated bandwidth is not allowed to be changed frequently, and the terrestrial users share the same total bandwidth in the control cycle of the non-terrestrial link control.

Next, the orchestrator 5 starts to control the non-terrestrial network communication at Step S103.

Next, the orchestrator 5 receives the request information at Step S104. In such a case, the orchestrator 5 receives the request information indicative of a request for communication, for example, from the terrestrial operator or the non-terrestrial operator, or from the terrestrial user or the non-terrestrial user.

Next, the orchestrator 5 performs a request adjustment of the terrestrial operator at Step S105.

Next, the orchestrator 5 determines whether the orchestrator 5 controls the non-terrestrial network communication at Step S106. When the orchestrator 5 controls the non-terrestrial network communication, the orchestrator 5 proceeds to Step S107. When the orchestrator 5 does not control the non-terrestrial network communication, the orchestrator 5 proceeds to Step S111.

When there are a plurality of non-terrestrial operators, the orchestrator 5 may be in charge of non-terrestrial topology control, request collection from the non-terrestrial and the terrestrial operators, and a negotiation between the operators, the respective non-terrestrial operators may be in charge of non-terrestrial beam control and non-terrestrial link control related to nodes that the respective non-terrestrial operators have, and the respective terrestrial operators may be in charge of terrestrial resource control.

When there is only one non-terrestrial operator, the non-terrestrial system managed by the non-terrestrial operator is subject to the non-terrestrial topology control, and since it can execute the non-terrestrial topology control by itself, the orchestrator 5 does not need to execute the non-terrestrial topology control.

Next, at Step S107, the orchestrator 5 determines the non-terrestrial node, the feeder-link earth station 4, and the like to be used. The orchestrator 5 may determine the topology of the non-terrestrial network based on, for example, the network link parameter calculated at Step S1, and determine the non-terrestrial node, the feeder-link earth station 4, and the like to be used based on the determined topology.

Next, at Step S108, the orchestrator 5 gives notification to the terrestrial node and the feeder-link earth station 4 to be used determined at Step S107.

Next, at Step S109, the orchestrator 5 determines whether approval has been obtained from the terrestrial node and the feeder-link earth station 4 that have been notified at Step S108. The orchestrator 5 proceeds to Step S116 when the approval has been obtained. The orchestrator 5 proceeds to Step S110 when the approval has not been obtained.

Next, the orchestrator 5 terminates the control of the non-terrestrial network at Step S116.

The orchestrator 5 makes an adjustment with the non-terrestrial operator and the terrestrial operator at Step S110, and proceeds to Step S107 again.

At Step S111, the orchestrator 5 notifies the non-terrestrial operator of the request information received at Step S104. The orchestrator 5 does not have to notify the non-terrestrial operator of the request information from the terrestrial user keeping the original value, and may increase/decrease the sum of request bandwidths requested of the non-terrestrial operator based on the monitoring information of the non-terrestrial system and the prediction of a request from the terrestrial user.

Next, at Step S112, the orchestrator 5 receives the determined topology of the network from the non-terrestrial operator that has been notified at Step S111.

Next, at Step S113, the orchestrator 5 notifies the non-terrestrial operator and the terrestrial operator used in the topology of the network received at Step S112.

Next, at Step S114, the orchestrator 5 determines whether approval has been obtained from the non-terrestrial operator and the terrestrial operator that have been notified at Step S113. When the orchestrator 5 has obtained the approval, the orchestrator 5 proceeds to Step S116. When the orchestrator 5 has not obtained the approval, the orchestrator 5 proceeds to Step S115.

At Step S115, the orchestrator 5 makes an adjustment with the non-terrestrial operator and the terrestrial operator, and proceeds to Step S111 again.

Next, the orchestrator 5 determines whether to terminate the operation at Step S117. When the operation is terminated, the operation of the orchestrator 5 is terminated. When the operation is not terminated, the orchestrator 5 proceeds to Step S118.

Next, at Step S118, the orchestrator 5 sets the time point ***t** = **t*** + 1, and proceeds to Step S101 again.

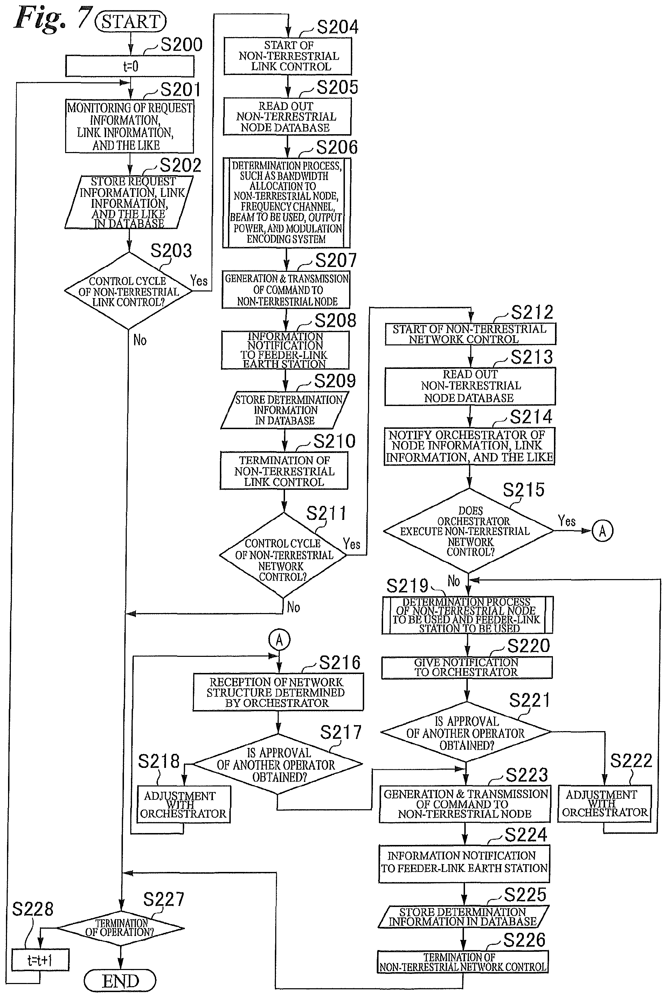

Next, the operation of the management station 3 will be described with reference to Fig. 7. Fig. 7 is a diagram illustrating a process of the operation of the management station. The management station 3 first sets the time point ***t*** to 0 at Step S200.

Next, the management station 3 receives the request information and the monitoring information at Step S201.

Next, the management station 3 stores the request information and the monitoring information in a database at Step S202. At Step S202, the management station 3 stores the request information and the monitoring information in, for example, the NOC database unit 33. The management station 3 may store the network link parameter calculated at Step S107.

Next, the management station 3 determines a control cycle of the non-terrestrial link that controls the non-terrestrial communication at Step S203. When the management station 3 fits into the control cycle of the non-terrestrial link, it proceeds to Step S204. When the management station 3 does not fit into the control cycle of the non-terrestrial link, it proceeds to Step S227.

Next, the management station 3 starts to control the non-terrestrial link at Step S204.

Next, the management station 3 reads out the NOC database unit 33 at Step S205. In such a case, for example, the management station 3 may read out the network link parameter, the request information, and the monitoring information stored at Step S202.

Next, the management station 3 performs determination processes, such as bandwidth allocation to the non-terrestrial node, a frequency channel, a used beam, output power, and a modulation/encoding system, at Step S206. In such a case, the management station 3 may calculate a non-terrestrial link parameter based on the monitoring information and the request information read out at Step S205, and perform the process corresponding to the calculated link parameter. The management station 3 may calculate the non-terrestrial link parameter based on the monitoring information and the network link parameter.

Next, the management station 3 generates and transmits a command to the non-terrestrial node at Step S207. In such a case, the management station 3 generates and transmits a command for performing various kinds of processes determined at Step S206.

Next, the management station 3 notifies the feeder-link earth station 4 of the information at Step S208.

Next, the management station 3 stores the various information determined at Step S206 in the database at Step S209.

Next, the management station 3 terminates the non-terrestrial link control at Step S210.

Next, the management station 3 determines a control cycle of the non-terrestrial network communication at Step S211. When the management station 3 fits into the control cycle of the non-terrestrial network communication, it proceeds to Step S212. When the management station 3 does not fit into the control cycle of the non-terrestrial network communication, it proceeds to Step S227.

Next, the management station 3 starts to control the non-terrestrial network communication at Step S212.

Next, the management station 3 reads out a non-terrestrial node database at Step S213. In such a case, the management station 3 reads out the request information, the monitoring information, and the various information stored at Step S202 and Step S213.

Next, at Step S214, the management station 3 notifies the orchestrator 5 of the information read out at Step S213. The information of which the management station 3 notifies the orchestrator 5 may be minimal information determined in advance or may be information equal to or more than the minimum.

Next, the management station 3 determines whether the orchestrator 5 controls the non-terrestrial network communication at Step S215. When the orchestrator 5 controls the non-terrestrial network communication, the management station 3 proceeds to Step S216. When the orchestrator 5 does not control the non-terrestrial network communication, the management station 3 proceeds to Step S219.

Next, at Step S216, the management station 3 receives the topology of the network notified by the orchestrator 5 at Step S108.

Next, the management station 3 determines whether approval from another non-terrestrial operator and terrestrial operator has been obtained at Step S217. When the approval has been obtained, the management station 3 proceeds to Step S223. When the approval has not been obtained, the management station 3 proceeds to Step S218.

At Step S218, the management station 3 makes an adjustment with the orchestrator 5, and proceeds to Step S216.

The management station 3 determines the non-terrestrial node and the feeder-link earth station 4 to be used at Step S219. In such a case, the management station 3 calculates the network link parameter based on, for example, the monitoring information, and determines the non-terrestrial node and the feeder-link earth station 4 to be used from the calculated network link parameter.

The management station 3 notifies the orchestrator 5 at Step S220.

Next, the management station 3 determines whether approval from another non-terrestrial operator and terrestrial operator has been obtained at Step S221. When the approval has been obtained, the management station 3 proceeds to Step S223. When the approval has not been obtained, the management station 3 proceeds to Step S222.

At Step S222, the management station 3 makes an adjustment with the orchestrator 5, and proceeds to Step S219.

The management station 3 generates and transmits a command to the non-terrestrial node at Step S223.

The management station 3 notifies the feeder-link earth station 4 of the information at Step S224.

The management station 3 stores the determined information in the NOC database unit 33 at Step S225.

The management station 3 terminates the control of the non-terrestrial network at Step S226.

Next, the management station 3 determines whether to terminate the operation at Step S227. When the operation is terminated, the operation of the management station 3 is terminated. When the operation is not terminated, the management station 3 proceeds to Step S228.

Next, the management station 3 sets the time point ***t** = **t*** + 1 at Step S228, and proceeds to Step S201 again.

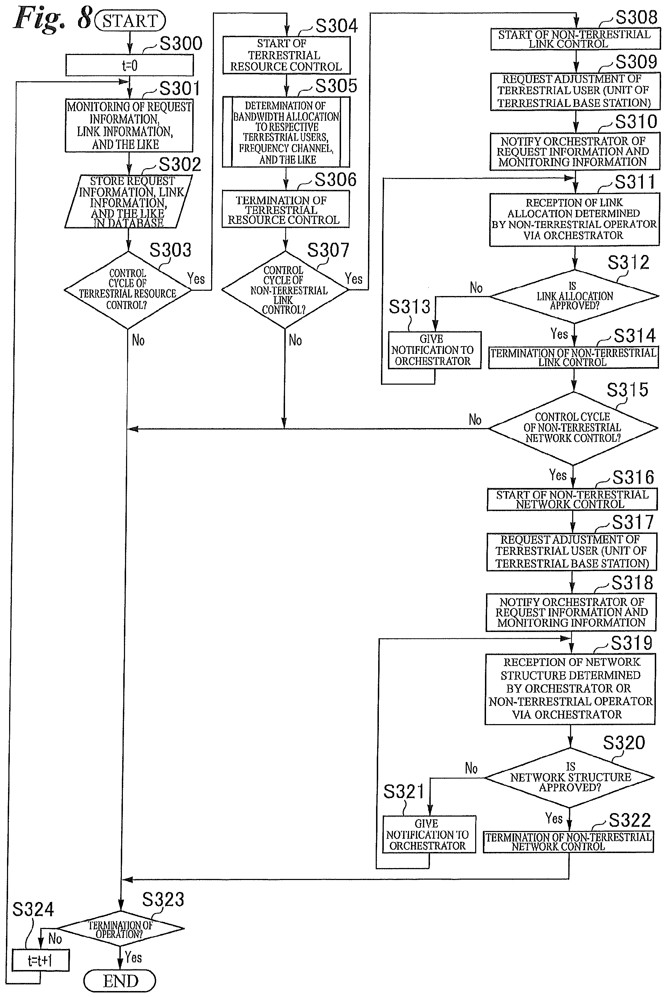

Next, the operation of the terrestrial operator, such as the terrestrial base station 21, will be described with reference to Fig. 8. Fig. 8 is a diagram illustrating a process of the operation of the terrestrial operator, such as the terrestrial base station. The terrestrial base station 21 first sets the time point ***t*** to 0 at Step S300.

Next, the terrestrial base station 21 receives the request information and the monitoring information at Step S301.

Next, the terrestrial base station 21 stores the request information and the monitoring information in the database at Step S302. At Step S302, the terrestrial base station 21 stores the request information and the monitoring information in, for example, the terrestrial database unit 219. The terrestrial base station 21 may store the non-terrestrial link parameter calculated at Step S206.

Next, the terrestrial base station 21 determines a control cycle of a terrestrial resource that controls the terrestrial communication at Step S303. When the terrestrial base station 21 fits into the control cycle of the terrestrial resource, it proceeds to Step S304. When the terrestrial base station 21 does not fit into the control cycle of the terrestrial resource, it proceeds to Step S323. The control cycle of the terrestrial resource may be set shorter than the control cycle of the non-terrestrial link control.

Next, the terrestrial base station 21 starts to control the terrestrial resource at Step S304.

Next, the terrestrial base station 21 determines bandwidth allocation to the respective terrestrial users and a frequency channel at Step S305. In such a case, the terrestrial base station 21 may calculate the terrestrial link parameter based on, for example, the non-terrestrial link parameter calculated at Step S206 and the request information and the monitoring information stored at Step S302, and determine bandwidth allocation to the respective communication terminals and a frequency channel corresponding to the calculated terrestrial link parameter.

Next, the terrestrial base station 21 terminates the control of the terrestrial resource at Step S306.

Next, the terrestrial base station 21 determines a control cycle of the non-terrestrial link at Step S307. When the terrestrial base station 21 fits into the control cycle of the non-terrestrial link, it proceeds to Step S308. When the terrestrial base station 21 does not fit into the control cycle of the non-terrestrial link, it proceeds to Step S323.

Next, the terrestrial base station 21 starts to control the non-terrestrial link at Step S308.

Next, the terrestrial base station 21 adjusts a request of the communication terminal at Step S309.

Next, the terrestrial base station 21 notifies the orchestrator 5 of the request information and the monitoring information at Step S310. The information of which the terrestrial base station 21 notifies the orchestrator 5 may be minimal information determined in advance or may be information equal to or more than the minimum.

Next, the terrestrial base station 21 receives the link allocation determined by the management station 3 at S206 via the orchestrator 5 at Step S311.

Next, at Step S312, the terrestrial base station 21 determines whether to approve the link allocation received at Step S311. When the link allocation is approved, the terrestrial base station 21 proceeds to Step S314. When the link allocation is not approved, the terrestrial base station 21 proceeds to Step S313.

At Step S313, the terrestrial base station 21 gives notification to the orchestrator 5, and proceeds to Step S311.

The terrestrial base station 21 terminates the non-terrestrial link control at Step S314.

Next, the terrestrial base station 21 determines a control cycle of the control of the non-terrestrial network at Step S315. When the terrestrial base station 21 fits into the control cycle of the non-terrestrial network, it proceeds to Step S316. When the terrestrial base station 21 does not fit into the control cycle of the non-terrestrial network, it proceeds to Step S323.

Next, the terrestrial base station 21 starts to control the non-terrestrial network communication at Step S316.

Next, the terrestrial base station 21 performs a request adjustment of the terrestrial user at Step S317.

Next, the terrestrial base station 21 notifies the orchestrator 5 of the request information and the monitoring information at Step S318.

Next, at Step S319, the terrestrial base station 21 receives the network structure or the topology determined by the orchestrator 5 at Step S107 or by the management station 3 at S219 via the orchestrator 5.

Next, at Step S320, the terrestrial base station 21 determines whether to approve the topology of the network received at Step S319. When the topology is approved, the terrestrial base station 21 proceeds to Step S322. When the network structure is not approved, the terrestrial base station 21 proceeds to Step S321.

At Step S321, the terrestrial base station 21 gives notification to the orchestrator 5, and proceeds to Step S319.

The terrestrial base station 21 terminates the control of the non-terrestrial network at Step S322.

Next, the terrestrial base station 21 determines whether to terminate the operation at Step S323. When the operation is terminated, the operation of the terrestrial base station 21 is terminated. When the operation is not terminated, the terrestrial base station 21 proceeds to Step S324.

Next, at Step S324, the terrestrial base station 21 sets a variable ***t** = **t*** + 1, and proceeds to Step S301 again.

This terminates the respective operations of the orchestrator 5, the management station 3, and the terrestrial base station 21. This enables roaming irrespective of the non-terrestrial network and the terrestrial network even when the plurality of non-terrestrial operators and terrestrial operators exist. Even when there is a difference in coverage or capacity between individual non-terrestrial operators and terrestrial operators, an appropriate link parameter is calculatable corresponding to the difference. This enables establishing and optimizing a flexible and global communication network corresponding to a user request.

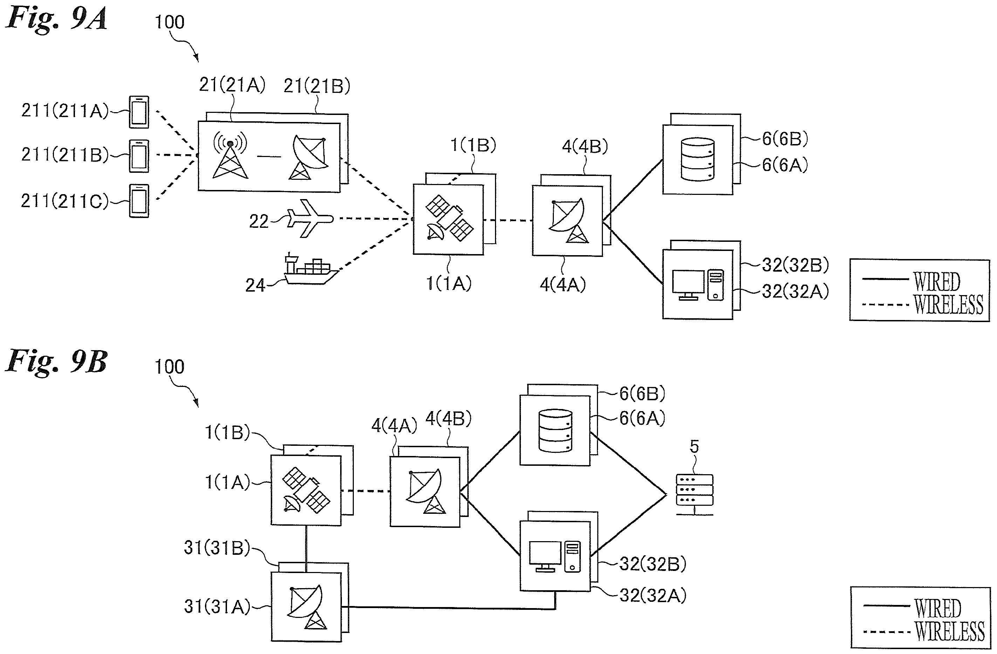

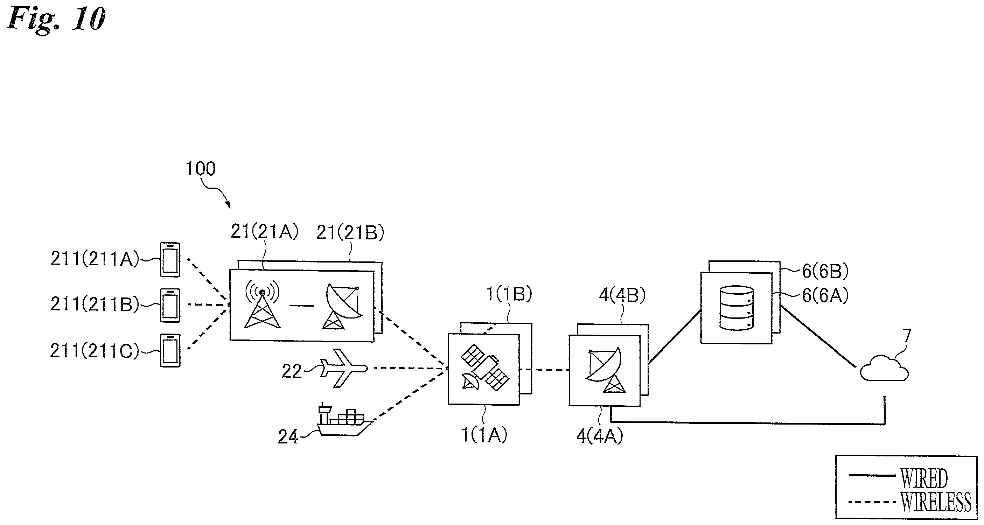

Next, a second embodiment of the hierarchical communication control system 100 will be described. Fig. 9A is a diagram illustrating a configuration of the hierarchical communication control system 100 using a C-plane (control plane). Fig. 9A, Fig. 9B, and Fig. 10 illustrate examples when the non-terrestrial system functions as a backhaul of the terrestrial system.

The hierarchical communication control system 100 includes the non-terrestrial node group 1, the terrestrial base station 21, the non-terrestrial user, such as the aircraft 22 and the ship 24, and the feeder-link earth station 4 connected to the non-terrestrial node group 1, the communication terminal 211 connected to the terrestrial base station 21, and the terrestrial core 6 and the non-terrestrial NOC 32 connected to the feeder-link earth station 4.

The hierarchical communication control system 100 performs a process by transmitting a message, such as registration and a session establishment request, to the terrestrial core 6 for the communication terminal 211, and performs a process by forwarding a message for requesting a bandwidth to the non-terrestrial NOC 32 for the non-terrestrial user.

The communication terminal 211 is first connected to the terrestrial base station 21 interfacing with the communication terminal 211, and this terrestrial base station 21 operates as a non-terrestrial user together with the communication terminal 211. The message from the terrestrial base station 21 reaches the terrestrial core 6 via the non-terrestrial node group 1 and the feeder-link earth station 4. The feeder-link earth station 4 houses a link of the non-terrestrial user and acts as a relay point.

On the other hand, the non-terrestrial user is directly connected to the non-terrestrial node group 1, and the request message of the non-terrestrial user reaches the non-terrestrial NOC 32 through the feeder-link earth station 4. In such a case, a link between the non-terrestrial node groups 1 between different operators may be established.

Next, a third embodiment of the hierarchical communication control system 100 will be described. Fig. 9B is a diagram illustrating a configuration of the hierarchical communication control system 100 using an M-plane (management plane).

The hierarchical communication control system 100 includes the non-terrestrial node group 1, the feeder-link earth station 4 and the non-terrestrial SOC 31 connected to the non-terrestrial node group 1, the terrestrial core 6 connected to the feeder-link earth station 4, the non-terrestrial NOC 32 connected to the feeder-link earth station 4 and the non-terrestrial SOC 31, and the orchestrator 5 connected to the terrestrial core 6 and the non-terrestrial NOC 32.

The hierarchical communication control system 100 processes signals between the orchestrator 5, the non-terrestrial NOC 32, and the terrestrial core 6. The orchestrator 5 has an interface with the non-terrestrial NOC 32 and the terrestrial core 6, and adjusts a plurality of operators of these. The non-terrestrial SOC 21 transmits a command for controlling the non-terrestrial node group 1 based on a determination made by a management function of the orchestrator 5 or the like.

Next, a fourth embodiment of the hierarchical communication control system 100 will be described. Fig. 10 is a diagram illustrating a configuration of the hierarchical communication control system 100 using the U-plane (user plane).

The hierarchical communication control system 100 includes the non-terrestrial node group 1, the terrestrial base station 21, the non-terrestrial user, such as the aircraft 22 and the ship 24, and the feeder-link earth station 4 connected to the non-terrestrial node group 1, the communication terminal 211 connected to the terrestrial base station 21, the terrestrial core 6 connected to the feeder-link earth station 4, and the data network 7 connected to the terrestrial core 6.

In the hierarchical communication control system 100, data of the terrestrial and non-terrestrial users, for example, reaches a communication destination, such as another user and the data network 7.

While the embodiments of the present invention have been described, the embodiments are presented as examples and are not intended to limit the scope of the invention. These novel embodiments are allowed to be implemented in other various configurations, and are allowed to be variously omitted, replaced, and changed within a scope not departing from the gist of the invention. These embodiments and their modifications are included in the scope and the gist of the invention, and are included in the invention described in the claims and the scope equivalent thereto.

### DESCRIPTION OF REFERENCE SIGNS

- 1:: Non-terrestrial node group
- 2:: Terrestrial node group
- 3:: Management station
- 4:: Feeder-link earth station
- 5:: Orchestrator
- 6:: Terrestrial core
- 7:: Data network
- 11:: Geostationary earth orbit satellite
- 12:: Non-geostationary orbit satellite
- 13:: High altitude communication platform
- 14:: Drone
- 21:: Terrestrial base station
- 22:: Aircraft
- 23:: Automobile
- 24:: Ship
- 31:: Non-terrestrial SOC
- 32:: Non-terrestrial NOC
- 33:: NOC database unit
- 41:: Non-terrestrial node communication unit
- 42:: Earth station terrestrial operator interface unit
- 51:: Non-terrestrial operator interface unit
- 52:: Orchestrator system processing unit
- 53:: Terrestrial operator interface unit
- 54:: Orchestrator control unit
- 55:: Orchestrator non-terrestrial network control calculator
- 56:: Orchestrator terrestrial communication request adjustment calculator
- 57:: Database unit
- 100:: Hierarchical communication control system
- 211:: Communication terminal
- 212:: Terrestrial and non-terrestrial operator interface unit
- 213:: Terrestrial core unit
- 214:: Terrestrial processing unit
- 215:: Terrestrial orchestrator interface unit
- 216:: Terrestrial control unit
- 217:: Terrestrial resource control calculator
- 218:: Terrestrial communication request adjustment calculator
- 219:: Terrestrial database unit
- 311:: Command transmission unit
- 312:: Telemetry receiving unit
- 313:: Command generation unit
- 321:: NOC processing unit
- 322:: NOC control unit
- 323:: NOC non-terrestrial network restriction calculator
- 324:: NOC non-terrestrial link control calculator
- 325:: NOC orchestrator interface unit
- DB 1:: NOC link monitoring database
- DB2:: NOC non-terrestrial node orbit database
- DB3:: NOC user request database
- DB4:: Terrestrial link monitoring database
- DB5:: Terrestrial user request database
- DB6:: Link monitoring database
- DB7:: Non-terrestrial node orbit database
- DB8:: User request database

## Claims

1. A communication control system comprising:
non-terrestrial link control means that controls non-terrestrial communication between a non-terrestrial node group including a non-terrestrial communication station and a terrestrial node group including a terrestrial communication station; and
terrestrial resource control means that controls terrestrial communication between the terrestrial node group and one or more communication terminals, wherein
the non-terrestrial link control means calculates a non-terrestrial link parameter for controlling the non-terrestrial communication based on monitoring information relating to at least one communication environment among the non-terrestrial node group, the terrestrial node group, and the communication terminal, and
the terrestrial resource control means calculates a terrestrial link parameter for controlling the terrestrial communication based on the monitoring information and the non-terrestrial link parameter calculated by the non-terrestrial link control means.

2. The communication control system according to claim 1, wherein
the non-terrestrial link control means calculates the non-terrestrial link parameter based on request information relating to a request for communication and the monitoring information.

3. The communication control system according to claim 2, wherein
the non-terrestrial link control means determines a priority order of controlling communication of the communication terminal based on the request information, and calculates the non-terrestrial link parameter based on the determined priority order and the monitoring information.

4. The communication control system according to any one of claims 1 to 3, further comprising
non-terrestrial network control means that controls non-terrestrial network communication between the non-terrestrial node groups, wherein
the non-terrestrial network control means calculates a network link parameter for controlling non-terrestrial network communication based on the monitoring information, and
the non-terrestrial link control means calculates the non-terrestrial link parameter based on the monitoring information and the network link parameter calculated by the non-terrestrial network control means.

5. A communication control device comprising:
a non-terrestrial link control unit that controls non-terrestrial communication between a non-terrestrial node group including a non-terrestrial communication station and a terrestrial node group including a terrestrial communication station; and
a terrestrial resource control unit that controls terrestrial communication between the terrestrial node group and one or more communication terminals, wherein
the non-terrestrial link control unit calculates a non-terrestrial link parameter for controlling the non-terrestrial communication based on monitoring information relating to at least one communication environment among the non-terrestrial node group, the terrestrial node group, and the communication terminal, and
the terrestrial resource control unit calculates a terrestrial link parameter for controlling the terrestrial communication based on the monitoring information and the non-terrestrial link parameter calculated by the non-terrestrial link control unit.

6. A communication control method that causes a computer to execute:
a non-terrestrial link control step of controlling non-terrestrial communication between a non-terrestrial node group including a non-terrestrial communication node and a terrestrial node group including a terrestrial communication node; and
a terrestrial resource control step of controlling terrestrial communication between the terrestrial node group and one or more communication terminals, wherein
the non-terrestrial link control step calculates a non-terrestrial link parameter for controlling the non-terrestrial communication based on monitoring information relating to at least one communication environment among the non-terrestrial node group, the terrestrial node group, and the communication terminal, and
the terrestrial resource control step calculates a terrestrial link parameter for controlling the terrestrial communication based on the monitoring information and the non-terrestrial link parameter calculated at the non-terrestrial link control step.
